# EUROPEAN PATENT APPLICATION

(11) **EP 4 790 934 A1**
(43) Date of publication of application: **12.08.2026**
(21) Application number: 24874891.5
(22) Date of filing: 25.09.2024
(51) Int. Cl.: H04L 5/00, H04W 72/0453, H04W 72/23, H04W 84/12, H04L 27/26

(54) **DISTRIBUTED RESOURCE UNIT TONE PLAN-BASED METHOD AND DEVICE FOR TRANSMITTING OR RECEIVING IN WIRELESS LOCAL AREA NETWORK SYSTEM**

(30) Priority: 05.10.2023 KR 20230132826; 06.12.2023 KR 20230175762; 03.01.2024 KR 20240001092; 10.07.2024 KR 20240091274; 21.08.2024 KR 20240112360
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR); JUNG, Insik, Seoul 06772 (KR)
(74) Representative: Mooser, Sebastian Thomas
(86) International application number: PCT/KR2024/014487
(87) International publication number: WO 2025/075333

(57) **Abstract**

A distributed resource unit (DRU) tone plan-based method and device for transmitting or receiving in a wireless local area network (WLAN) system are disclosed. The method performed by a first station (STA) in a WLAN system, according to one embodiment of the present disclosure, may comprise steps in which: the first STA receives, from an access point (AP), a trigger frame, which includes a common information field and a special user information field; and the first STA transmits a trigger-based (TB) physical layer protocol data unit (PPDU) to the AP in a first bandwidth on the basis of the trigger frame, wherein the common information field or the special user information field transmitted in a second bandwidth of the first bandwidth can include a first subfield related to whether a DRU is applied to the second bandwidth.

## Description

### [TECHNICAL FIELD]

The present disclosure relates to a method and device for transmitting or receiving based on a distributed resource unit tone plan in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for transmitting or receiving based on a distributed resource unit tone plan in a wireless LAN system.

The technical problem of the present disclosure is related to a distributed resource unit tone plan for reducing interference between STAs in a wireless LAN system.

The technical problem of the present disclosure is to provide a method and apparatus for indicating a channel and/or tone plan to which a distributed resource unit is applied through a trigger frame in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method according to one embodiment of the present disclosure may include receiving, by a first station (STA) from an access point (AP), a trigger frame including a common information field and a special user information field; and transmitting, by the first STA to the AP, a trigger-based (TB) physical layer protocol data unit (PPDU) based on the trigger frame over a first bandwidth, and the common information field or the special user information field transmitted in a second bandwidth among the first bandwidths may include a first subfield related to whether a distributed resource unit (DRU) is applied on the second bandwidth.

A method according to another embodiment of the present disclosure may include transmitting, by an access point (AP) to a first station (STA), a trigger frame including a common information field and a special user information field; and receiving, by the AP from the first STA, a trigger-based (TB) physical layer protocol data unit (PPDU) based on the trigger frame over a first bandwidth, and the common information field or the special user information field transmitted in a second bandwidth among the first bandwidths may include a first subfield related to whether a distributed resource unit (DRU) is applied on the second bandwidth.

### [Technical Effects]

According to various embodiments of the present disclosure, a method and device for transmitting or receiving based on a distributed resource unit tone plan in a wireless LAN system may be provided.

According to various embodiments of the present disclosure, a distributed resource unit tone plan for reducing interference between STAs in a wireless LAN system may be provided.

According to various embodiments of the present disclosure, coverage and throughput can be improved through efficient DRU-based transmission.

According to various embodiments of the present disclosure, a method and apparatus may be provided for indicating a channel and/or tone plan to which a distributed resource unit is applied through a trigger frame in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for explaining examples of resource units of a wireless LAN system to which the present disclosure may be applied.
FIG. 11 is a drawing illustrating examples of DRUs to which the present disclosure may be applied.
FIG. 12 is a drawing illustrating an exemplary format of a trigger frame to which the present disclosure may be applied.
FIG. 13 is a drawing illustrating an example of a method performed by a first STA according to the present disclosure.
FIG. 14 is a drawing illustrating an example of a method performed by an AP according to the present disclosure.
FIG. 15 is a drawing illustrating a PPDU transmission and reception procedure between a transmitting STA and a receiving STA according to an example of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

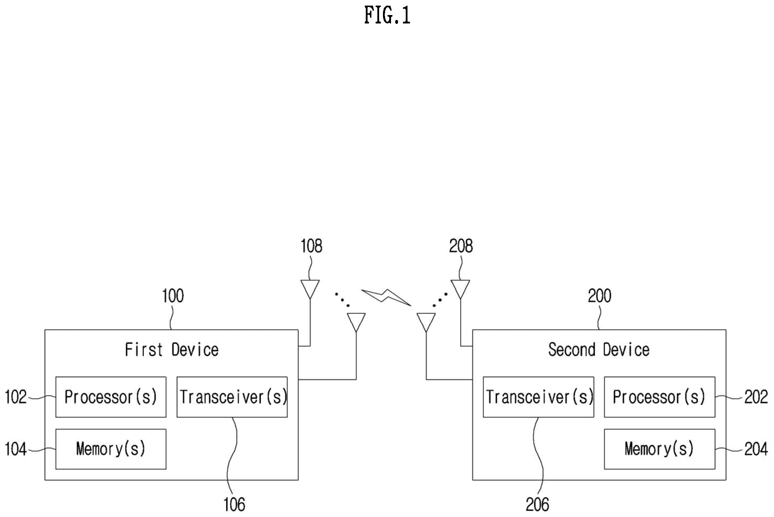

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

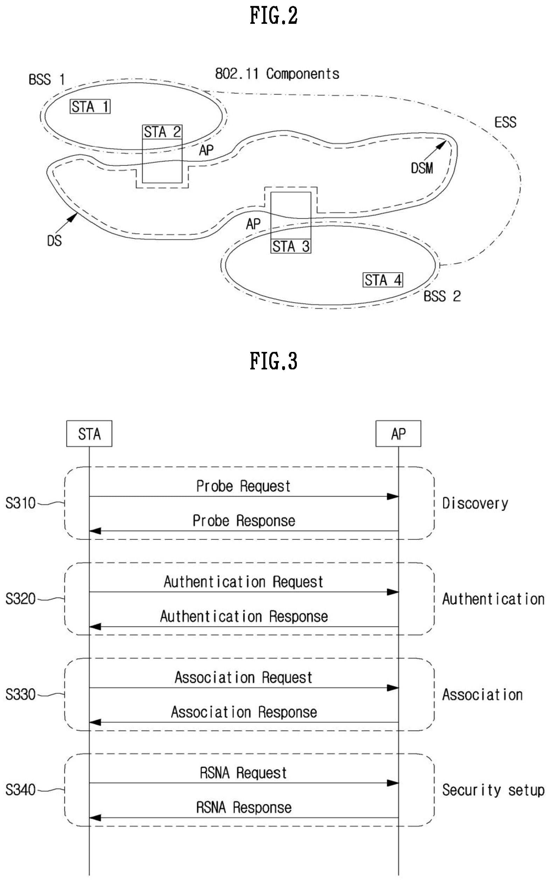

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

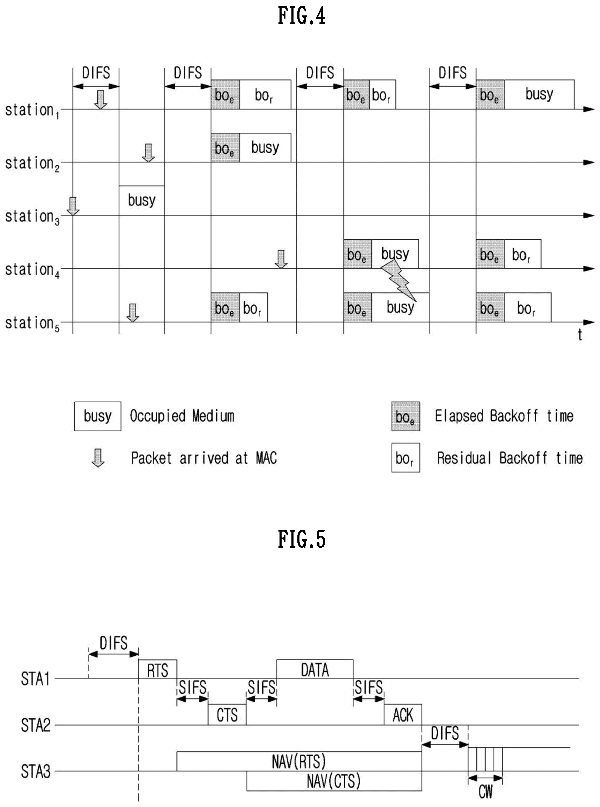

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

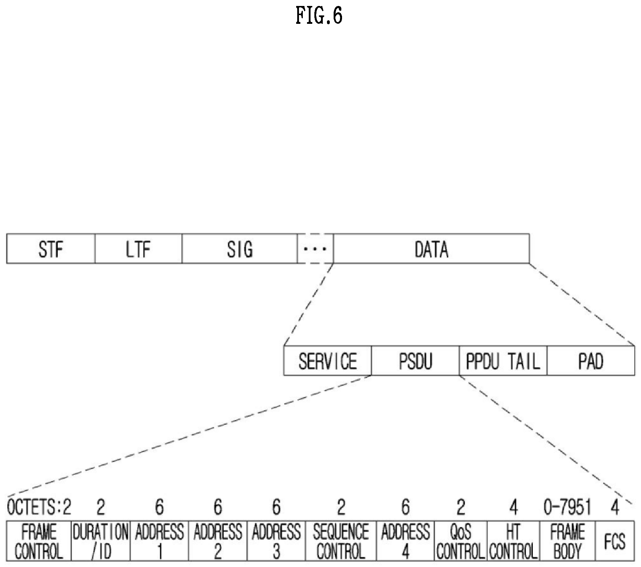

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

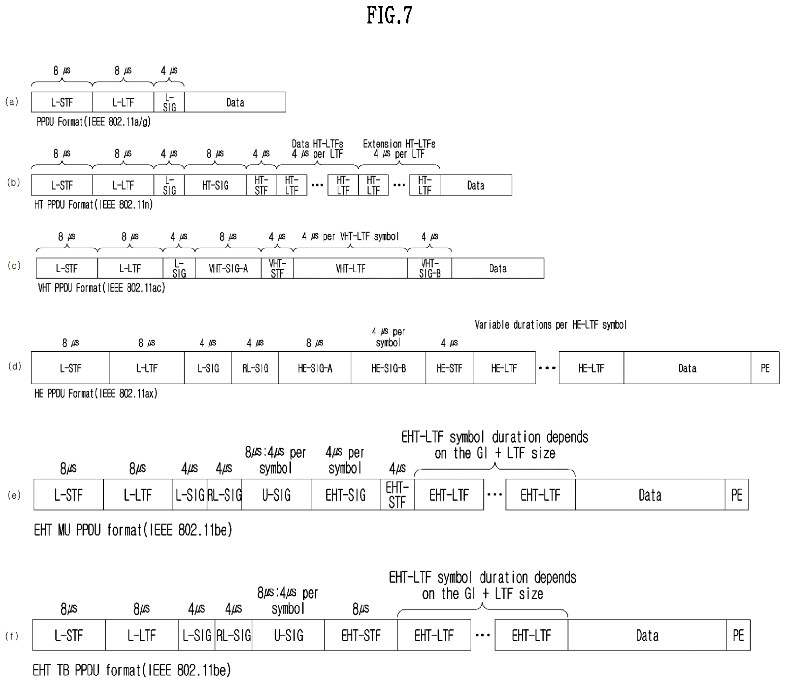

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. (f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource unit

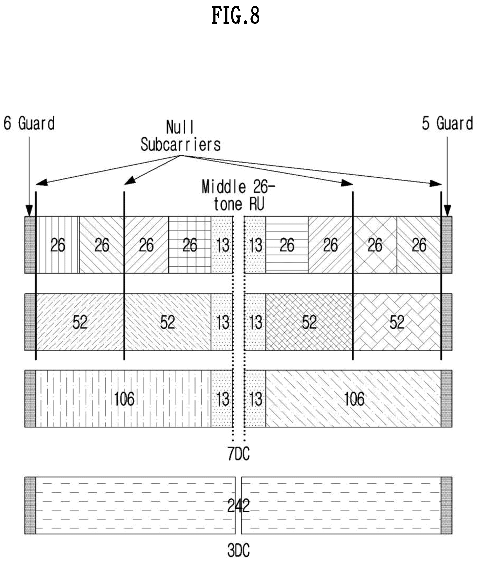

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

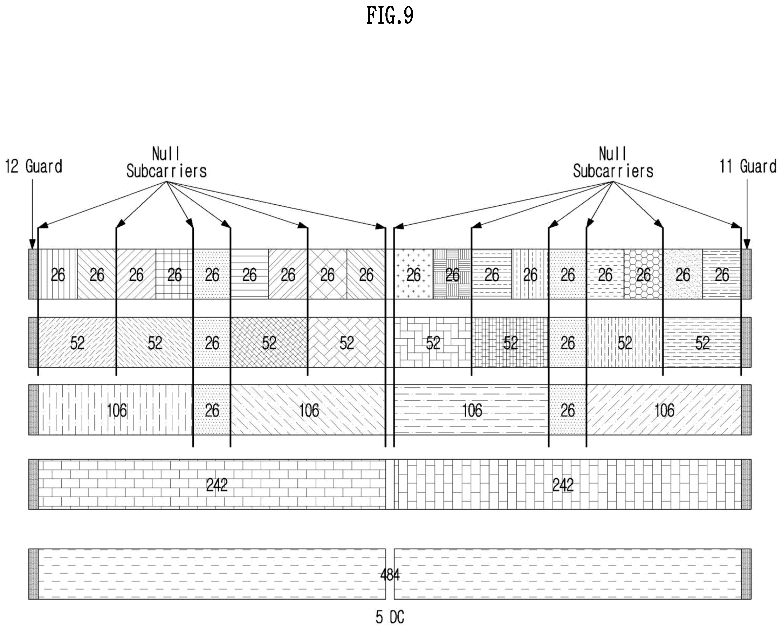

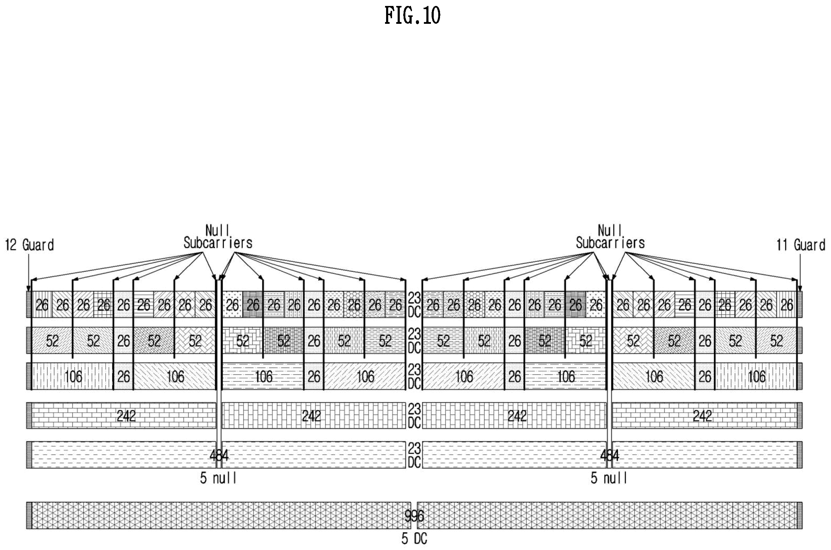

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8.

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA (e.g., AP) transmitting the DL MU PPDU may allocate a first RU (e.g., 26/52/106/242-RU, etc.) to the first STA and a second RU (e.g., 26/52/106/242-RU, etc.) to the second STA. That is, within a single MU PPDU, the transmitting STA (e.g., AP) may transmit X-STF (e.g., X is HE, EHT, etc.), X-LTF, and Data fields for the first STA through the first RU, and transmit X-STF, X-LTF, and Data fields for the second STA through the second RU. Information regarding the allocation of RUs may be signaled through the X-SIG (e.g., X is HE, EHT, U) field of the X-PPDU format.

### Distributed Resource Unit (DRU)

Limitations on power spectral density (PSD) may be imposed in the sub-7GHz (e.g., 6GHz) band due to regulations in various regions. For Non-AP STAs in the low power indoor (LPI) band, the PSD limitation may be -1dBm/MHz. For example, for a conventional 52-tone RU, the maximum transmit (Tx) power may be approximately 6dBm.

Also, different restrictions may apply in 2.4 GHz and 5 GHz bands. For example, in EU/China/Japan/Korea, a PSD restriction of 10 dBm/MHz may apply in 2.4 GHz band. This means that for existing 52-tone RU, the maximum Tx power can be approximately 17 dBm. If the PSD restriction in 5 GHz band can be circumvented, the transmit power can be increased. For example, for existing 52-tone RU, the maximum transmit power is 24 dBm, which is still 6 dBm below the maximum allowable effective isotropic radiated power (EIRP) of 30 dBm.

If the PSD limitation is overcome, the transmission power can be increased, thereby improving spectral efficiency or extending the range.

Considering that the PSD limitation is defined per MHz for each STA, when distributing tones of small-sized RUs over a wide bandwidth, Since the tones for each STA are non-contiguous, each tone can be transmitted at high power. An RU including such distributed tones is referred to as a distributed RU (DRU), and, to distinguish it from this, an RU including continuous tones defined in a conventional wireless LAN system (e.g., a system according to IEEE 802.11ax, 11be, etc.) may be referred to as a regular RU (RRU).

Compared to STAs transmitting conventional RRUs, STAs transmitting DRUs can use higher power. For example, a 52-tone DRU across 80 MHz has only one tone per MHz, while there are approximately 13 tones per MHz for a 52-tone RRU. Assuming a PSD limit of -1 dBm/MHz in the 6 GHz LPI band, for a 52-tone RU, the transmit power can be increased by 11 dB when using DRUs. Increasing the transmit power in this way allows for higher MCS applications and longer ranges to be supported.

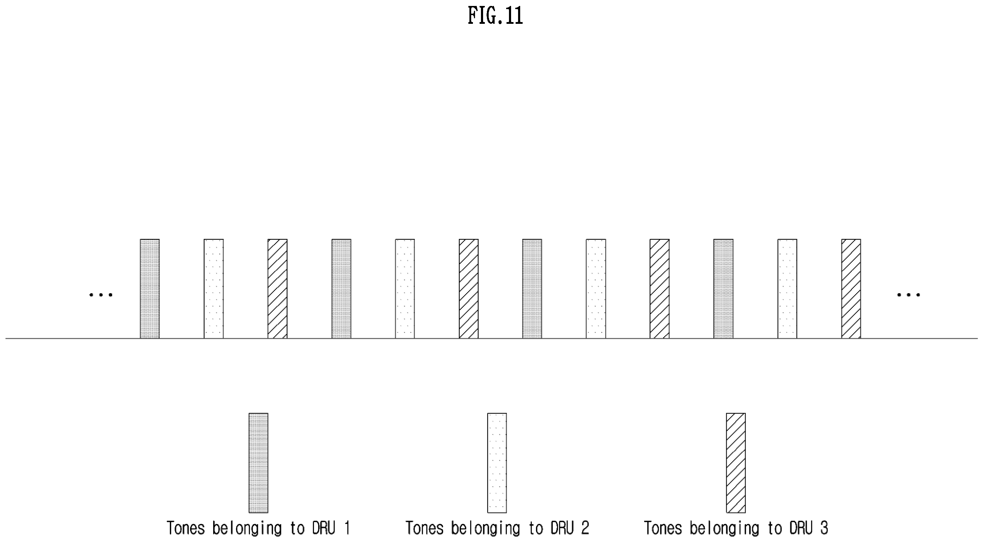

FIG. 11 is a drawing for describing examples of DRUs to which the present disclosure may be applied.

In the example of FIG. 11, STA1 transmits on DRU1, STA2 transmits on DRU2, and STA3 transmits on DRU3. Each STA may apply a transmission power boost by using the DRU. Compared to the case where an RRU of the same size is used, a higher transmission power is applied to all tones in the DRU, and thus the spectral efficiency can be greatly improved. In this way, the DRU can be particularly usefully applied in UL-OFDMA.

DRUs may also be utilized in the case of AP. In some cases, the AP may perform DL-OFDMA transmission to STA(s) using only some of DRU1, DRU2, and DRU3, in which case a transmit power boost due to the use of DRUs may be applied.

To maximize power boost, tones within a DRU can be distributed as far apart as possible. For example, a DRU including one tone per MHz may be considered an optimal example. The size of the DRU (or the number of available tones (i.e., the number of tones excluding unusable tones such as null tones, guard tones, and DC tones) included in a DRU can be defined to be the same as the size of the RRU (or the number of available tones included in a RRU). Accordingly, the impact on various technologies defined based on the existing RRU can be minimized. The table below shows examples of achievable power boost (in dB) for various DRUs distributed over different bandwidths. The examples in the table below assume the 6 GHz LPI band, and power boost can also be achieved in the 2.4 GHz and 5 GHz bands in other areas. For example, in an 80 MHz UL-OFDMA transmission by 8 users, when each user uses a 106-tone DRU, the overall performance can be improved by approximately 8.13 dB compared to when each user uses a 106-tone RRU. Accordingly, by using DRU, PSD limitations can be overcome and significant gains can be obtained.

**[Table 1]**

| | 20MHz bandwidth | 40MHz bandwidth | 80MHz bandwidth |
|---|---|---|---|
| 26-tone RU | 8.13 | 11.14 | 11.14 |
| 52-tone RU | 6.37 | 8.13 | 11.14 |
| 106-tone RU | 3.36 | 6.37 | 8.13 |
| 242-tone RU | Not applicable | 2.69 | 5.12 |
| 484-tone RU | Not applicable | Not applicable | 2.69 |

FIG. 8 is a diagram illustrating an example format of a trigger frame to which the present disclosure may be applied. The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

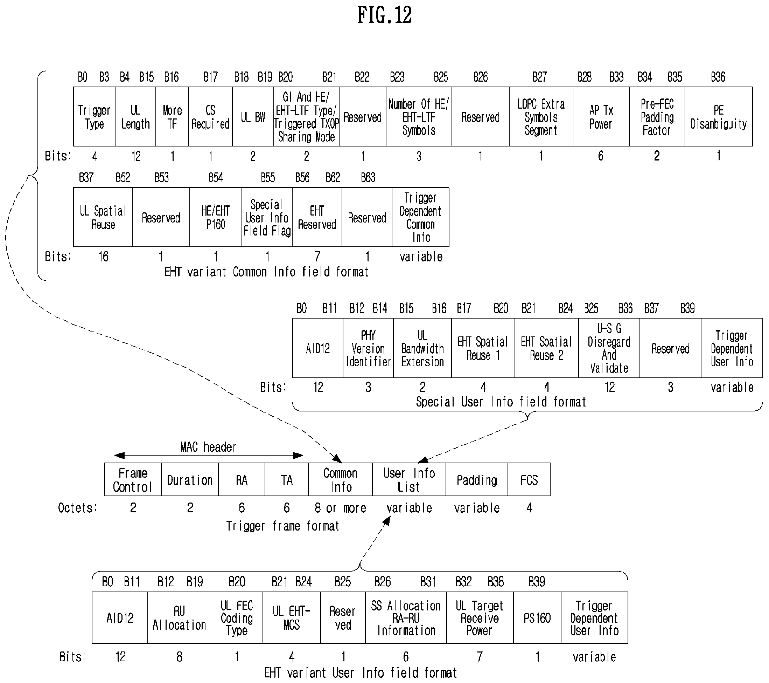

The common information field may include information that is common to one or more TB PPDU transmissions requested by a trigger frame, such as trigger type, UL length, presence of a subsequent trigger frame (e.g., More TF), whether CS (channel sensing) is required, UL BW (bandwidth), etc. Fig. 12 illustrates an example of an EHT variant common information field format.

A trigger type subfield of a 4-bit size may have a value of 0-15. Among them, 0, 1, 2, 3, 4, 5, 6 and 7, values of a trigger type subfield, are defined as corresponding to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and values of 8-15 are defined as being reserved.

Among the common information, a trigger dependent common information subfield may include information that is selectively included based on a trigger type.

A special user info field may be included within the trigger frame. The special user info field does not contain user-specific information, but rather includes extended common information not provided in the common information field.

A user information list includes at least 0 user information field. FIG. 12 illustratively shows an EHT variant user information field format.

An AID12 subfield basically represents that it is a user information field for a STA having a corresponding AID. In addition, when an AID12 field has a predetermined specific value, it may be utilized for other purposes such as allocating a random access (RA)-RU or being configured in the form of a special user information field. A special user information field is a user information field that does not include user-specific information but includes extended common information not provided in a common information field. For example, a special user information field may be identified by an AID12 value of 2007, and a special user information field flag subfield within a common information field may represent whether a special user information field is included.

A RU allocation subfield may represent the size and location of a RU/a MRU. For this purpose, a RU allocation subfield may be interpreted together with the PS160 (primary/secondary 160MHz) subfield of a user information field, the UL BW subfield of a common information field, etc.

For example, as shown in Table 2 below, the mapping of B7-B1 of a RU allocation subfield may be defined together with the settings of the B0 and PS160 subfields of a RU allocation subfield. Table 2 shows an example of encoding the PS160 subfield and the RU allocation subfield of an EHT variant user information field.

**[Table 2]**

| **PS160 subfield** | **B0 of the RU Allocation subfield** | **B7-B1 of the RU Allocation subfield** | **Bandwidth (MHz)** | **RU/MRU size** | **RU/MRU index** | **PRY RU/ MRU index** |
|---|---|---|---|---|---|---|
| 0-3: | | 0-8 | 20, 40, 80, 160, or 320 | 26 | RU1 to RU9, respectively | 37×*N*+RU index |
| 80 MHz segment where the RU is located | | | | | | |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80. 160, or 320 | 52 | RU1 to RU4, respectively | 16×*N*+RU index |
| | | 41-44 | 40, 80, 160, or 320 | | RU5 to RU8, respectively | |
| | | 45-52 | 80, 160, or 320 | | RU9 to RU16, respectively | |
| | | 53,54 | 20, 40, 80, 160, or 320 | 106 | RU1 and RU2, respectively | 8×*N*+RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80. 160, or 320 | 242 | RU1 | 4×*N*+RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×*N*+RU index |
| | | 66 | 80, 160, or 320 | | RU2 | |
| | | 67 | 80, 160, or 320 | 996 | RU1 | *N+* RU index |

| | | | | | | |
|---|---|---|---|---|---|---|
| 0-1: | 0 | 68 | Reserved | | | Reserved |
| 160 MHz segment where the RU is located | 1 | | 160 or 320 | 2×996 | RU1 | X1 + RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: | | 70-72 | 20, 40, 80, 160, or 320 | 52+26 | MRU1 to MRU3, respectively | 12×*N*+ MRU index |
| 80 MHz segment where the RU is located | | | | | | |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×*N*+ MRU index |
| | | 84, 85 | 40, 80, 160, or 320 | 106+26 | MRU3 and MRU4, respectively | |
| | | 86-89 | 80, 160, or 320 | 106+26 | MRU5 to MRU8, respectively | |
| | | 90-93 | 80, 160, or 320 | 484+242 | MRU1 to MRU4, respectively | 4×*N*+ MRU index |
| 0-1: | 0 | 94,95 | 160 or 320 | 996+484 | MRU1 and MRU2, respectively | 4×X1 + MRU index |
| 160 MHz segment where the MRU is located | | | | | | |
| | 1 | | | | MRU3 and MRU4, respectively | |
| 0-1: | 0 | 96-99 | 160 or 320 | 996+484+ 242 | MRU1 to MRU4, respectively | 8×X1 + MRU index |
| 160 MHz segment where the MRU is located | | | | | | |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 1484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel, and when its value is set as 1, it may represent that RU allocation is applied to the secondary 80MHz channel of primary 160MHz. When B0 of a RU allocation subfield is set as 0, it may represent that RU/MRU allocation is applied to the lower 80MHz of secondary 160MHz, and when its value is set as 1, it may represent that RU allocation is applied to the upper 80MHz of secondary 160MHz.

In the trigger frame RU allocation table of Table 2, parameter N may be calculated based on the formula of N=2*X1+X0. For a bandwidth less than or equal to 80MHz, values of PS160, B0, X0 and X1 may be set as 0. For a 160MHz bandwidth and a 320MHz bandwidth, values of PS160, B0, X0 and X1 may be set as shown in Table 3. This configuration represents the absolute frequency order for primary and secondary 80MHz and 160MHz channels. The order from left to right represents the order from low frequency to high frequency. A primary 80MHz channel is indicated as P80, a secondary 80MHz channel is indicated as S80, and a secondary 160MHz channel is indicated as S160.

**[Table 3]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### DRU tone plan based transmission and reception

As previously mentioned, in order to overcome PSD limitations and improve power gain, a DRU using distributed tones/subcarriers can be applied instead of an RRU using continuous tones/subcarriers. Below, we will explain how to specify the channel to which the DRU is applied and the DRU tone plan when triggering a DRU-based transmission via a trigger frame.

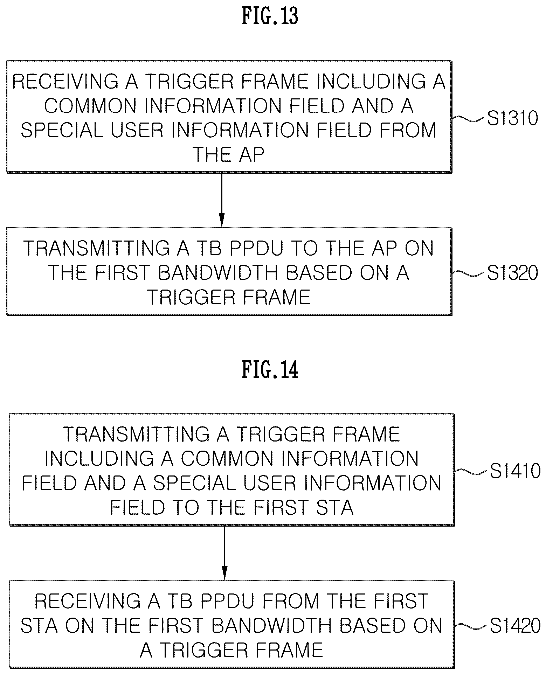

FIG. 13 is a drawing for illustrating an example of a method performed by a first STA according to the present disclosure.

The first STA may receive a trigger frame including a common information field and a special user information field from the access point (AP) (S1310).

For example, the first STA may receive a PPDU including a trigger frame from the AP on the first bandwidth. Here, the bandwidth size of the TB (trigger based) PPDU solicited by the trigger frame may also be the first bandwidth. The first bandwidth may be 160 MHz, 320 MHz, or a bandwidth greater than or equal to 320 MHz, but is not limited thereto.

The first STA may transmit a TB PPDU to the AP on the first bandwidth based on a trigger frame (S1320).

Here, a common information field or special user information field transmitted in the second bandwidth of the first bandwidth may include a first subfield related to whether a distributed resource unit (DRU) or a predefined unit (i.e., RRU) is applied on the second bandwidth.

For example, the sizes of the first bandwidth and the second bandwidth may be the same. That is, the first subfield may indicate whether the DRU is applied to the entire first bandwidth where the TB PPDU is transmitted.

As another example, assume a case where a second bandwidth and a third bandwidth, etc. are included in the first bandwidth. In this case, a common information field or a special user information field transmitted in the third bandwidth of the first bandwidth may include a second subfield related to whether a DRU is applied in the third bandwidth, and the size and location (i.e., location on the trigger frame) of each of the first subfield and the second subfield may be the same.

That is, the first subfield of the trigger frame transmitted over the second bandwidth indicates whether the DRU is applied over the second bandwidth, and the second subfield of the trigger frame transmitted over the third bandwidth indicates whether the DRU is applied over the third bandwidth.

Additionally or alternatively, the first subfield may include a first bitmap, and each bit of the first bitmap may indicate whether a DRU is applied on a corresponding unit channel (i.e., a unit channel constituting the second bandwidth). That is, the nth (n is a natural number greater than or equal to 1) bit of the first bitmap may indicate whether a DRU is applied to the nth unit bandwidth of the second bandwidth.

For example, when n is 2, the first bit of the first bitmap indicates whether DRU is applied to the first unit bandwidth of the second bandwidth, and the second bit of the first bitmap indicates whether DRU is applied to the second unit bandwidth of the second bandwidth. However, this is merely one example, and n can be implemented as a natural number greater than or equal to 2.

Likewise, the second subfield may include a second bitmap, and each bit of the second bitmap may indicate whether a DRU is applied on the corresponding unit channel (i.e., the unit channel constituting the third bandwidth). That is, the nth (n is a natural number greater than or equal to 1) bit of the second bitmap may indicate whether a DRU is applied to the nth unit bandwidth of the third bandwidth.

For example, when n is 2, the first bit of the second bitmap indicates whether DRU is applied to the first unit bandwidth of the third bandwidth, and the second bit of the second bitmap indicates whether DRU is applied to the second unit bandwidth of the third bandwidth. However, this is merely an example, and n can be implemented as a natural number greater than or equal to 2.

Here, the size of each of the first unit bandwidth and the second unit bandwidth may be 20 MHz, 40 MHz, 80 MHz or 160 MHz.

Additionally or alternatively, a common information field or special user information field transmitted in the second bandwidth of the first bandwidth may include a third subfield related to the distributed width (DBW) mode applied to the second bandwidth. Here, based on the first subfield indicating that no DRU is applied to the second bandwidth, the third subfield may be reserved or used for other purposes.

And, the common information field or special user information field transmitted in the third band of the first band may include a fourth subfield related to the DBW mode applied to the third band, and the size and position of each of the third subfield and the fourth subfield may be the same.

As an example of the present disclosure, a value indicating a 20 + 20 + 40 MHz DBW mode set on a third subfield may be used for a 20 + 20 + 40 MHz DBW mode, a P(puncturing) 20 + 20 + 40 MHz DBW mode, a 20 + P20 + 40 MHz DBW mode, a P40 + 40 MHz DBW mode, or a 20 + 20 + P40 MHz DBW mode (i.e., used to indicate the mode).

For example, if the lowest or second lowest 20 MHz channel within the second bandwidth is punctured, the DRU of the punctured channel is not assigned, so the value indicating the 20 + 20 + 40 MHz DBW mode on the third subfield can be used for the 20 + 20 + 40 MHz DBW mode, P20 + 20 + 40 MHz DBW mode, and 20 + P20 + 40 MHz DBW mode.

Also, when the first 40 MHz channel or the second 40 MHz channel is punctured within the second bandwidth, the DRU of the punctured channel is not allocated, so the value indicating the 20 + 20 + 40 MHz DBW mode on the third subfield can be used for the P40 + 40 MHz DBW mode or the 20 + 20 + P40 MHz DBW mode.

Accordingly, the overhead of the third subfield can be reduced, and the DBW mode to be used by each STA can also be clearly specified.

Similarly, the value indicating the 40 + 20 + 20 MHz DBW mode set on the third subfield can be used for the 40 + 20 + 20 MHz DBW mode, 40 + P20 + 20 MHz DBW mode, 40 + 20 + P20 MHz DBW mode, 40 + P40 MHz DBW mode, or P40 + 20 + 20 MHz DBW mode.

For example, a value indicating a 20 + 20 + 40 MHz DBW mode set on the fourth subfield can be used for a 20 + 20 + 40 MHz DBW mode, a P20 + 20 + 40 MHz DBW mode, a 20 + P20 + 40 MHz DBW mode, a P40 + 40 MHz DBW mode, or a 20 + 20 + P40 MHz DBW mode.

And, the value indicating the 40 + 20 + 20 MHz DBW mode set on the fourth subfield can be used for the 40 + 20 + 20 MHz DBW mode, 40 + P20 + 20 MHz DBW mode, 40 + 20 + P20 MHz DBW mode, 40 + P40 MHz DBW mode, or P40 + 20 + 20 MHz DBW mode.

As an example of the present disclosure, based on the size of the first bandwidth being 160 MHz or more, the trigger frame may include a fifth subfield associated with a DRU tone plan applied to each of the 80 MHz channels.

The method described in the example of FIG. 13 can be performed by the first device (100) of FIG. 1. For example, one or more processors (102) of the first device (100) of FIG. 1 can receive a trigger frame containing a common information field and a special user information field from an access point (AP) through one or more transceivers (106). One or more processors (102) can transmit a TB PPDU to the AP over a first bandwidth through one or more transceivers (106) based on the trigger frame.

Furthermore, one or more memories (104) of the first device (100) may store instructions for performing the method described in the example of FIG. 13 or the examples described below when executed by one or more processors (102).

FIG. 14 is a drawing for illustrating an example of a method performed by an AP according to the present disclosure.

The AP may transmit a trigger frame including a common information field and a special user information field to the first STA (S1410).

As described above, the AP may transmit a PPDU containing a trigger frame to the first STA over the first bandwidth. At this time, the bandwidth size of the TB PPDU requested by the trigger frame may also be the first bandwidth. The first bandwidth may be 160 MHz, 320 MHz, or a bandwidth greater than or equal to 320 MHz, but is not limited thereto.

The AP may receive a TB PPDU from the first STA on the first bandwidth based on a trigger frame (S1420).

Here, the configuration of the trigger frame and whether the DRU applied/indicated by the trigger frame is applied, DBW mode and/or DRU tone plan examples have been explained with reference to FIG. 13, so redundant explanations will be omitted.

The method described in the example of FIG. 14 can be performed by the second device (200) of FIG. 1. For example, one or more processors (202) of the second device (200) of FIG. 1 can transmit a trigger frame containing a common information field and a special user information field to the first STA through one or more transceivers (106). One or more processors (202) can receive a TB PPDU on the first bandwidth from the first STA through one or more transceivers (206) based on the trigger frame.

Furthermore, one or more memories (204) of the second device (200) may store instructions for performing the method described in the example of FIG. 14 or the examples described below when executed by one or more processors (202).

Hereinafter, a method for performing DRU-based transmission based on trigger frames is described in detail.

As an example of the present disclosure, a UHR trigger frame based on the trigger frame illustrated in FIG. 12 may include a UHR variant common information field, a UHR variant special user information field, a UHR variant user information field, etc. Additionally, the UHR variant user information field may include an RU allocation subfield, and the RU/MRU used for each STA may be indicated through the RU allocation subfield.

As an example of the present disclosure, the same RU allocation subfield as when RRU is applied may be used when DRU is applied. When DRU application is indicated (by a trigger frame, etc.), the STA may identify that it is a DRU-based transmission using a defined mapping rule and a DRU tone plan. That is, even when DRU is applied, the RU allocation subfield does not need to be changed or additionally defined, and a field to indicate DRU application may be included on the trigger frame.

The following embodiments relate to a method for indicating whether a DRU is applied in a TB PPDU solicited by a trigger frame, and a method for indicating a channel and tone plan applied to the TB PPDU.

### Embodiment 1

In one embodiment of the present disclosure, a trigger frame may include a subfield indicating whether a DRU is applied to a TB PPDU requested by the trigger frame, and said subfield may consist of 1 bit. In one example, the subfield may be included in the UHR variant common information field or the UHR variant special user information field of the trigger frame.

For example, the subfield may be set on at least one of the 23rd bit (B22), 27th bit (B26), 54th bit (B53), 57th bit (B56) through 64th bit (B63) of the UHR variant common information field. That is, the subfield may be set at a position corresponding to a reserved bit (e.g., EHT reserved subfield, etc.) in the EHT variant common information field. As another example, the subfield may be set on the 38th bit (B37) through 40th bit (B39) of the special user information field of the trigger frame. That is, the subfield may be set at a position corresponding to a reserved bit in the EHT special user information field. As yet another example, the subfield may be included on the trigger-dependent common information subfield or the trigger-dependent user information subfield of the trigger frame.

For example, if the value of the subfield above is set to 0 (or 1), this may mean that RRU is applied to the TB PPDU requested by the trigger frame. If the value of the subfield above is set to 1 (or 0), this may mean that DRU is applied to the TB PPDU requested by the trigger frame.

Additionally or alternatively, the trigger frame may include a subfield (e.g., 1 bit) indicating whether the DRU is applied to the entire bandwidth over which the TB PPDU is transmitted.

Additionally or alternatively, the trigger frame may include a subfield indicating whether DRU is applied on a specific channel unit (e.g., 20, 40, 80, 160, 320 MHz, etc.). That is, the trigger frame may include a subfield indicating whether DRU is applied on a channel-by-channel basis, and said subfield may include 1 bit information corresponding to a specific channel.

Specifically, the (1 bit) information of the trigger frame transmitted for each channel unit may differ. For example, assume a case where a 160 MHz TB PPDU is requested through a trigger frame, the bandwidth of the PPDU transmitting the trigger frame is also 160 MHz, and whether a DRU is applied in 80 MHz units is indicated. In this case, the trigger frame transmitted in the first 80 MHz of the total bandwidth may contain information indicating whether a DRU is applied in the first 80 MHz, and the trigger frame transmitted in the second 80 MHz of the total bandwidth may include information indicating whether a DRU is applied in the second 80 MHz.

Additionally, the information within the trigger frame transmitted across the entire bandwidth may be identical, except for the information indicating whether DRU is applied per channel.

### Embodiment 1-1

Embodiment 1-1 relates to a method for indicating a DRU tone plan applied to a TB PPDU through a trigger frame. The number of bits in a subfield indicating a DRU tone plan applied to a TB PPDU included in the trigger frame may be determined according to the number of DRU tone plans defined in the UHR. The subfield may be included in the 26th bit (B25) of the UHR variant user information field of the trigger frame (i.e., a bit corresponding to the reserved bit of the EHT variant user information field) and/or the trigger dependent user information subfield, etc.

For example, when 20, 40, 80, and 160 MHz DRU tone plans are defined, the subfield indicating the DRU tone plan applied to the TB PPDU may be composed of 2 bits. For example, when the subfield values are set to 0, 1, 2, and 3 respectively, this indicates that the 20, 40, 80, and 160 MHz DRU tone plans are applied to the TB PPDU respectively.

As another example, if 20, 40, and 80 MHz DRU tone plans are defined, the subfield indicating the DRU tone plan applied to the TB PPDU may be composed of 2 bits. For example, if the subfield values are set to 0, 1, and 2 respectively, this indicates that 20, 40, and 80 MHz DRU tone plans are applied to the TB PPDU respectively. And, 3 of the subfield values may be reserved.

The subfield indicating the DRU tone plan may be valid only within the channel indicated as where the DRU is applied. That is, within the channel indicated as where the DRU is not applied, the bit corresponding to the subfield indicating the DRU tone plan may be reserved or used to indicate other information.

When Embodiment 1 and Embodiment 1-1 are applied, RRU and DRU may not be mixed within the entire channel or within the channel where DRU application is indicated. Additionally, Embodiment 1 and Embodiment 1-1 may be simpler to implement and have less overhead compared to other examples.

### Embodiment 2

In one embodiment of the present disclosure, a trigger frame may include a subfield indicating whether a DRU is applied to a TB PPDU requested by the trigger frame, and said subfield may consist of 1 bit. As an example, the subfield may be included in the UHR variant common information field or the UHR variant special user information field of the trigger frame.

For example, the subfield may be set on at least one of the 23rd bit (B22), 27th bit (B26), 54th bit (B53), 57th bit (B56) through 64th bit (B63) of the UHR variant common information field. That is, the subfield may be set at a position corresponding to a reserved bit (e.g., EHT reserved subfield, etc.) in the EHT variant common information field. As another example, the subfield may be set on the 38th bit (B37) through 40th bit (B39) of the special user information field of the trigger frame. That is, the subfield may be set at a position corresponding to a reserved bit in the EHT special user information field. As yet another example, the subfield may be included on the trigger dependent common information subfield or the trigger dependent user information subfield of the trigger frame.

For example, if the value of the subfield above is set to 0 (or 1), this may mean that RRU is applied to the TB PPDU requested by the trigger frame. If the value of the subfield above is set to 1 (or 0), this may mean that DRU is applied to the TB PPDU requested by the trigger frame.

Additionally or alternatively, the trigger frame may include a subfield (e.g., 1 bit) indicating whether the DRU is applied to the entire bandwidth over which the TB PPDU is transmitted.

Additionally or alternatively, the trigger frame may include a subfield indicating whether the DRU is applied on a specific channel unit (e.g., 20, 40, 80, 160, 320 MHz, etc.). That is, the trigger frame may include a subfield indicating whether the DRU is applied on a channel-by-channel basis, and the subfield may include 1 bit information corresponding to a specific channel.

Specifically, the (1 bit) information of the trigger frame transmitted for each channel unit may differ. For example, assume a case where a 160 MHz TB PPDU is requested through a trigger frame, the bandwidth of the PPDU transmitting the trigger frame is also 160 MHz, and whether a DRU is applied in 80 MHz units is indicated. In this case, the trigger frame transmitted in the first 80 MHz of the total bandwidth may contain information indicating whether a DRU is applied in the first 80 MHz, and the trigger frame transmitted in the second 80 MHz of the total bandwidth may include information indicating whether a DRU is applied in the second 80 MHz.

Additionally, the information within the trigger frame transmitted across the entire bandwidth may be identical, except for the information indicating whether DRU is applied per channel.

### Embodiment 2-1

Embodiment 2-1 relates to a method for indicating a DRU tone plan applied to a TB PPDU through a trigger frame. The number of bits in a subfield indicating a DRU tone plan applied to a TB PPDU included in the trigger frame may be determined according to the number of DRU tone plans defined in the UHR. The subfield may be included in the 26th bit (B25) of the UHR variant user information field of the trigger frame (i.e., a bit corresponding to the reserved bit of the EHT variant user information field) and/or the trigger dependent user information subfield, etc.

For example, when 20, 40, 80, and 160 MHz DRU tone plans are defined, the subfield indicating the DRU tone plan applied to the TB PPDU may be composed of 3 bits. For example, if the value of the subfield is set to 0, this may mean that RRU is applied to the TB PPDU. If the value of the subfield is set to 1, 2, 3, and 4 respectively, this may indicate that 20, 40, 80, and 160 MHz DRU tone plans are applied to the TB PPDU respectively. And, 5 to 7 of the values of the subfield may be reserved.

As another example, when 20, 40, and 80 MHz DRU tone plans are defined, the subfield indicating the DRU tone plan applied to the TB PPDU may be composed of 2 bits. For example, if the value of the subfield is set to 0, this may mean that RRU is applied to the TB PPDU. And, if the value of the subfield is set to 1, 2, and 3 respectively, this may indicate that 20, 40, and 80 MHz DRU tone plans are applied to the TB PPDU respectively.

The subfield indicating the DRU tone plan may be valid only within the channel indicated as where the DRU is applied. That is, within the channel indicated as where the DRU is not applied, the bit corresponding to the subfield indicating the DRU tone plan may be reserved or used to indicate other information.

When Embodiment 2 and Embodiment 2-1 are applied, RRU and DRU can be mixed and applied during TB PPDU transmission, thereby increasing flexibility. Also, Embodiment 2 and Embodiment 2-1 may be applied to STAs that do not have DRU capability.

### Embodiment 3

In one embodiment of the present disclosure, a trigger frame may include a subfield indicating whether a DRU is applied to a TB PPDU requested by the trigger frame, and said subfield may be composed of a bitmap. In one example, said subfield may be included in the UHR variant common information field or the UHR variant special user information field of the trigger frame.

For example, the subfield may be set on at least one of the 23rd bit (B22), 27th bit (B26), 54th bit (B53), 57th bit (B56) through 64th bit (B63) of the UHR variant common information field. That is, the subfield may be set at a position corresponding to a reserved bit (e.g., EHT reserved subfield, etc.) in the EHT variant common information field. As another example, the subfield may be set on the 38th bit (B37) through 40th bit (B39) of the special user information field of the trigger frame. That is, the subfield may be set at a position corresponding to a reserved bit in the EHT special user information field. As yet another example, the subfield may be included on the trigger-dependent common information subfield or the trigger-dependent user information subfield of the trigger frame.

For example, if the subfield value is set to 0 (or 1), this may mean that RRU is applied to the TB PPDU requested by the trigger frame. If the subfield value is set to 1 (or 0), this may mean that DRU is applied to the TB PPDU requested by the trigger frame. 1 bit of the bitmap may correspond to a unit bandwidth (e.g., 20 MHz) constituting the TB PPDU bandwidth, and may be mapped to the bitmap in order of lowest unit bandwidth.

The number of bits in the bitmap corresponding to the subfield may be changed according to the TB PPDU bandwidth. For example, when the TB PPDU bandwidth is 20, 40, 80, 160, or 320 MHz, the size of the bitmap corresponding to the subfield may be 1, 2, 4, 8, or 16 bits.

Alternatively, the size of the bitmap corresponding to the subfield may be fixed based on the maximum bandwidth defined in the UHR. For example, if the maximum bandwidth defined in the UHR is 320 MHz, the size of the bitmap corresponding to the subfield may be fixed to 16 bits.

In this case, if the TB PPDU bandwidth is less than 320 MHz, the unit bandwidth may be mapped preferentially to the bit with the lower (or higher) bit index among the bitmaps corresponding to the subfield, and the remaining bits (i.e., the bits with the higher (or lower) bit index) may be reserved. For example, when a 160 MHz TB PPDU is requested, whether or not to apply DRU may be indicated on the 8 bits of the lower (or higher) index, and the bits of the remaining index may be reserved. In this case, the 8 bits of the lower (or higher) index may indicate whether to apply DRU in order of the lower (or higher) unit bandwidth (e.g., 20 MHz).

As another example, whether DRU is applied to specific channel units (e.g., 20, 40, 80, 160, 320 MHz) can be indicated via a bitmap on a channel-by-channel basis through a trigger frame. That is, the bitmap information of the trigger frame transmitted for each channel unit may differ.

For example, assume a case where a trigger frame requesting a 160 MHz TB PPDU (wherein the bandwidth of the PPDU transmitting the trigger frame is also 160 MHz) indicates whether to apply DRU in 80 MHz increments. In this case, the trigger frame transmitted at the first 80 MHz of the total bandwidth may include a 4-bit subfield indicating whether to apply DRU in 20 MHz increments, and for each bit of the bitmap corresponding to the subfield, information indicating whether to apply DRU may be set sequentially starting from the lower 20 MHz of the first 80 MHz. And, the trigger frame transmitted at the second 80 MHz of the total bandwidth may include a 4-bit subfield indicating whether to apply DRU in 20 MHz increments, and for each bit of the bitmap corresponding to the subfield, information indicating whether to apply DRU may be set sequentially starting from the lower 20 MHz of the second 80 MHz.

Additionally, the information within the trigger frame transmitted across the entire bandwidth may be identical, except for the information indicating whether the DRU is applied to each channel.

### Embodiment 3-1

Embodiment 3-1 relates to a method for indicating a DRU tone plan applied to a TB PPDU via a trigger frame. The subfield indicating the DRU tone plan applied to a TB PPDU via the trigger frame included in the trigger frame may be the same as the subfield described in Embodiment 1-1 and/or Embodiment 1-2. Since the application of DRU is indicated for each unit bandwidth (e.g., 20 MHz) via the bitmap-based subfield described in Example 3, additionally indicating the application of RRU/DRU via the UHR variant user information field may not be advantageous in terms of overhead.

In Embodiment 3, the application of DRU is indicated based on a bitmap, so the application of DRU or RRU can be easily indicated per channel. In addition, when Embodiment 3 is applied, RRU and DRU can be mixed and applied during TB PPDU transmission, thereby increasing flexibility. Also, Embodiment 3 can be applied to STAs that do not have DRU capability.

### Embodiment 4

In Embodiment 4, the following conditions may be applied. That is, conditions 1 to 3 may be applied to Embodiments 4-1, 4-2 and 4-3.

Condition 1: When DRU is applied to 20, 40, or 80 MHz TB PPDUs, 20, 40, or 80 MHz DRU tone plans may always be applied.

Condition 2: In 160 or 320 MHz TB PPDUs, 80 MHz DRU tone plans may be applied on an 80 MHz channel basis.

Condition 3: When DRU is applied to TB PPDUs of 80 MHz or higher and a specific channel is punctured, a DRU tone plan corresponding to the channel size may be applied to each unpunctured channel. For example, if an 80 MHz TB PPDU is requested by a trigger frame and a DRU is applied to an 80 MHz channel with 20 MHz punctured, a 20 MHz tone plan and a 40 MHz tone plan may be applied to the 20 MHz and 40 MHz channels, respectively, that are not punctured. As another example, if an 80 MHz TB PPDU is requested by a trigger frame and a DRU is applied to an 80 MHz channel with 40 MHz punctured, a 40 MHz tone plan may be applied to the 40 MHz channel that is not punctured.

### Embodiment 4-1

In one embodiment of the present disclosure, a trigger frame may include a subfield indicating whether a DRU is applied to a TB PPDU requested by the trigger frame, and the subfield may be composed of a bitmap. In one example, the subfield may be included in the UHR variant common information field or the UHR variant special user information field of the trigger frame.

For example, the subfield may be set on at least one of the 23rd bit (B22), 27th bit (B26), 54th bit (B53), 57th bit (B56) through 64th bit (B63) of the UHR variant common information field. That is, the subfield may be set at a position corresponding to a reserved bit (e.g., EHT reserved subfield, etc.) in the EHT variant common information field. As another example, the subfield may be set on the 38th bit (B37) through 40th bit (B39) of the special user information field of the trigger frame. That is, the subfield may be set at a position corresponding to a reserved bit in the EHT special user information field. As yet another example, the subfield may be included on the trigger-dependent common information subfield or the trigger-dependent user information subfield of the trigger frame.

For example, if the subfield value is set to 0 (or 1), this may mean that RRU is applied to the TB PPDU requested by the trigger frame. If the subfield value is set to 1 (or 0), this may mean that DRU is applied to the TB PPDU requested by the trigger frame. 1 bit of the bitmap may correspond to a unit bandwidth (e.g., 80 MHz) constituting the TB PPDU bandwidth, and may be mapped to the bitmap in order of lowest unit bandwidth.

The number of bits in the bitmap corresponding to the subfield may be changed according to the TB PPDU bandwidth. For example, when the TB PPDU bandwidth is 20, 40, 80, MHz, respectively, the size of the bitmap corresponding to the subfield may be 1 bit. For another example, when the TB PPDU bandwidth is 160, 320, 480, 640 MHz, respectively, the size of the bitmap corresponding to the subfield may be 2, 4, 6, 8 bits, respectively.

Alternatively, the size of the bitmap corresponding to the subfield may be fixed based on the maximum bandwidth defined in the UHR. For example, if the maximum bandwidth defined in the UHR is 320 MHz, the size of the bitmap corresponding to the subfield may be fixed to 4 bits. In this case, if the TB PPDU bandwidth is less than 320 MHz, information indicating whether to apply DRU per unit bandwidth may be mapped to the lower (or higher) bit index first or in sequence.

For example, when a 160 MHz TB PPDU is requested by a trigger frame, information indicating whether a DRU is applied to a unit bandwidth (e.g., 80 MHz) constituting 160 MHz can be set/mapped to each bit of the bitmap in the order of the high (or, low) bit index of the bitmap corresponding to the subfield. And, the remaining bits of the bitmap corresponding to the subfield may be reserved.

As another example, when a 20 MHz TB PPDU is requested by a trigger frame, information indicating whether a DRU is applied to the 20 MHz may be set/mapped on the 1 bit of the highest (or lowest) index of the bitmap corresponding to the subfield. And, the remaining bits of the bitmap (e.g., 3 bits) may be reserved.

As another example, when a 40 MHz TB PPDU is requested by a trigger frame, information indicating whether the DRU is applied to the 40 MHz may be set/mapped on the 1 bit of the highest (or lowest) index of the bitmap corresponding to the subfield. And, the remaining bits of the bitmap (e.g., 3 bits) may be reserved.

As another example, when an 80 MHz TB PPDU is requested by a trigger frame, information indicating whether the DRU is applied to the 80 MHz may be set/mapped on the 1 bit of the highest (or lowest) index of the bitmap corresponding to the subfield. And, the remaining bits of the bitmap (e.g., 3 bits) may be reserved.

Additionally or alternatively, the trigger frame may indicate via a bitmap whether the DRU is applied to a specific channel unit (e.g., 80, 160, 320 MHz, etc.). That is, the bitmap information of the trigger frame transmitted for each channel unit may differ.

For example, assume a trigger frame requesting a 160 MHz TB PPDU (wherein the bandwidth of the PPDU transmitting the trigger frame is also 160 MHz) that indicates whether to apply DRU in 80 MHz increments. In this case, the trigger frame transmitted in the first 80 MHz of the total bandwidth may include a 1-bit subfield indicating whether to apply DRU to the first 80 MHz of the 160 MHz. And, the trigger frame transmitted in the second 80 MHz of the total bandwidth may include a 1-bit subfield indicating whether to apply DRU to the second 80 MHz of the 160 MHz. Additionally, the information within the trigger frames transmitted in the total bandwidth may be identical, except for the information indicating whether to apply DRU for each channel.

As another example, assume a trigger frame requesting a 320 MHz TB PPDU (wherein the bandwidth of the PPDU transmitting the trigger frame is also 320 MHz) that indicates whether to apply DRU in 80 MHz increments. In this case, the trigger frame transmitted in the first 160 MHz of the total bandwidth may include a 2-bit subfield indicating whether to apply DRU starting from the lower (or higher) 80 MHz channel of the first 160 MHz. And, the trigger frame transmitted in the second 160 MHz of the total bandwidth may include a 2-bit subfield indicating whether to apply DRU starting from the lower (or higher) 80 MHz channel of the second 160 MHz. Additionally, the information within the trigger frames transmitted in the total bandwidth may be identical, except for the information indicating whether DRU is applied for each channel.

When 20, 40 and 80 MHz TB PPDUs are transmitted, the trigger frame may include a bitmap-based subfield indicating whether a DRU is applied to the channel corresponding to the bandwidth.

### Embodiment 4-2

Embodiment 4-2 relates to a method for indicating puncturing information. That is, a trigger frame may include indication information related to puncturing applied to a channel of 80 MHz or higher where a TB PPDU is transmitted. Depending on whether puncturing is applied to a specific channel, the DRU tone plan applied to the TB PPDU may be changed.

A subfield containing instruction information related to puncturing may be set in at least one of the 23rd bit (B22), 27th bit (B26), 54th bit (B53), 57th bit (B56) through 64th bit (B63) of the UHR variant common information field. That is, the subfield may be set at a position corresponding to a reserved bit (e.g., EHT reserved subfield, etc.) in the EHT variant common information field. As another example, the subfield may be set on the 38th bit (B37) through 40th bit (B39) of the special user information field of the trigger frame. That is, the subfield may be set at a position corresponding to a reserved bit in the EHT special user information field. As yet another example, the subfield may be included on the trigger-dependent common information subfield or the trigger-dependent user information subfield of the trigger frame.

As an example of the present disclosure, puncturing instruction information for non-OFDMA situations defined in U-SIG may be used. Additionally or alternatively, additional puncturing patterns may be indicated using reserved values of U-SIG. Punctured situations of the entire channel, as well as channels to which the entire DRU is applied, may be indicated by the puncturing patterns. Accordingly, the receiving STA may perform various operations through additional puncturing patterns.

Additionally or alternatively, a subfield indicating instruction information related to puncturing may include a bitmap. If each bit value of the bitmap is set to 0 (or 1), this may mean that the channel corresponding to that bit is punctured. As another example, if each bit value of the bitmap is set to 1 (or 0), this may mean that the channel corresponding to that bit is not punctured.

In addition, the number of bits of the bitmap corresponding to the subfield may be changed depending on the TB PPDU bandwidth. For example, when the TB PPDU bandwidth is 20, 40, 80, 160, or 320 MHz, the size of the bitmap corresponding to the subfield may be 1, 2, 4, 8, or 16 bits.

Alternatively, the size of the bitmap corresponding to the subfield may be fixed based on the maximum bandwidth defined in the UHR. For example, if the maximum bandwidth defined in the UHR is 320 MHz, the size of the bitmap corresponding to the subfield may be fixed to 16 bits.

Here, if the TB PPDU bandwidth is less than 320 MHz, the unit bandwidth may be mapped preferentially to the bit with a lower (or higher) bit index among the bitmaps corresponding to the subfield, and the remaining bits may be reserved.

As another example, when a 160 MHz TB PPDU is requested by a trigger frame, information regarding whether puncturing is applied sequentially based on the lowest 20 MHz channel can be set/mapped to each of the 8 bits of the low (or high) index, and the remaining 8 bits can be reserved. Accordingly, various puncturing patterns can be indicated compared to non-OFDMA puncturing instructions.

Additionally or alternatively, puncturing instruction information may be indicated via a bitmap, but the puncturing instruction information may only be applied to 80 MHz where DRU is applied. And, puncturing instruction information may be set starting from 80 MHz of a lower (or higher) frequency.

For example, assume that in a 320 MHz channel, the 80 MHz channels to which DRU is applied are the first 80 MHz and the last 80 MHz. For example, the size of a bitmap containing instruction information related to puncturing may be 8 bits. And, for each bit of the bitmap, information indicating whether puncturing is applied sequentially based on the lowest (or highest) 20 MHz channel may be mapped.

Additionally or alternatively, the trigger frame may include a bitmap indicating whether puncturing is applied to a specific channel unit (e.g., 80, 160, 320 MHz). In this case, the trigger frame requesting a 20 or 40 MHz TB PPDU may not include the bitmap. That is, the information mapped to the bitmap on the trigger frame transmitted for each channel unit may differ.

For example, a trigger frame requesting a 160 MHz TB PPDU (wherein the bandwidth of the PPDU containing the trigger frame is also 160 MHz) may indicate whether puncturing is applied in 80 MHz increments. In this case, the trigger frame transmitted at the first 80 MHz of the 160 MHz may include a 4-bit subfield (i.e., bitmap) with bits mapped to indicate whether puncturing is applied sequentially based on the lowest (or highest) 20 MHz channel of the first 80 MHz. And, the trigger frame transmitted at the second 80 MHz of the 160 MHz may include a 4-bit subfield (i.e., bitmap) with bits mapped to indicate whether puncturing is applied sequentially based on the lowest (or highest) 20 MHz channel of the second 80 MHz.

Additionally or alternatively, the trigger frame may include a bitmap indicating whether puncturing is applied to a specific channel unit (e.g., 80, 160, 320 MHz). In this case, the bitmap may not be included on the trigger frame requesting a 20 or 40 MHz TB PPDU. That is, the presence or absence of the bitmap and the type of related information may vary on the trigger frame transmitted for each channel unit.

For example, assume that a 320 MHz TB PPDU is requested by a trigger frame (wherein the bandwidth of the PPDU transmitting the trigger frame is also 320 MHz), and that a DRU is applied to the first 80 MHz and the last 80 MHz. In this case, a (4-bit) bitmap/subfield for puncturing instructions may be included only on the trigger frame transmitted at the first 80 MHz and the last 80 MHz. For example, information/bits indicating whether to puncture sequentially based on the lowest (or highest) 20 MHz of the first/last 80 MHz may be mapped onto the bitmap/subfield.

When Embodiment 4-2 is applied, the overhead for puncturing instructions of specific channels of bandwidth can be reduced.

### Embodiment 4-3

Embodiment 4-3 relates to a method for indicating a DRU tone plan applied to a TB PPDU.

When DRU is applied to each 80 MHz channel in a bandwidth of 160 MHz or more, if there are no punctured channels, an 80 MHz DRU tone plan may be applied. Additionally, a 160 MHz DRU tone plan may be applied in a bandwidth of 160 MHz or more.

Information indicating the DRU tone plan applied to the TB PPDU (e.g., information indicating whether the 160 MHz DRU tone plan is applied) may be included in the 26th bit (B25) of the UHR variant user information field of the trigger frame (i.e., the bit corresponding to the reserved bit of the EHT variant user information field) and/or the trigger dependent user information subfield, etc.

For example, a trigger frame may include a 1-bit subfield indicating whether a 160 MHz DRU tone plan is applied. For example, assume that a DRU is indicated to be applied to a specific 80 MHz (of 160 MHz), and that there are no punctured channels in the specific 80 MHz.

In this case, if the subfield value is set to 0 (or 1), this may mean that an 80 MHz DRU tone plan is applied to a specific 80 MHz channel. If there are punctured channels, a 20 or 40 MHz DRU tone plan may be applied to the non-punctured channels. If it is indicated that no DRU is applied, an RRU tone plan may be applied to a specific 80 MHz channel. And, assume a case where it is indicated that DRU is applied to two 80 MHz channels constituting a 160 MHz channel and there are no punctured channels in the entire 160 MHz channel. In this case, if the subfield value is set to 1 (or 0), this may mean that a 160 MHz DRU tone plan is applied to a specific 80 MHz channel and to an 80 MHz channel adjacent to the specific 80 MHz channel.

When a DRU is applied to two consecutive 80 MHz channels constituting a 160 MHz channel in a bandwidth of 160 MHz or more and there are no punctured channels within the 160 MHz channel, a subfield indicating whether a 160 MHz DRU tone plan is applied may be valid. When a DRU is not applied to two consecutive 80 MHz channels constituting a 160 MHz channel in a bandwidth of 160 MHz or more, or when a specific channel within the 160 MHz channel is punctured, the subfield may be reserved or used for other purposes.

Additionally or alternatively, a subfield indicating whether a 160 MHz DRU tone plan is applied may be included in the UHR variant common information field or the UHR variant special user information field. For example, the subfield may be set in at least one of the 23rd bit (B22), 27th bit (B26), 54th bit (B53), 57th bit (B56) through 64th bit (B63) of the UHR variant common information field. That is, the subfield may be set at a position corresponding to a reserved bit (e.g., the EHT reserved subfield, etc.) in the EHT variant common information field. As another example, the subfield may be set in the 38th bit (B37) through 40th bit (B39) of the special user information field of the trigger frame. That is, the subfield may be set at a position corresponding to a reserved bit in the EHT special user information field. As another example, the above subfield may be included on the trigger-dependent common information subfield or the trigger-dependent user information subfield of the trigger frame.

Here, a subfield indicating whether a 160 MHz DRU tone plan is applied may be composed of a bitmap. For example, when a 160 MHz TB PPDU is requested, the size of the bitmap may be composed of 1 bit, and when a 320 MHz TB PPDU is requested, the size of the bitmap may be composed of 2 bits.

As another example, the size of the bitmap may be 2 bits regardless of the bandwidth size of the TB PPDU requested by the trigger frame. In this case, when a 160 MHz TB PPDU is requested, only a specific bit (e.g., 1 bit) of the bitmap may be used and the rest reserved. And when a 320 MHz TB PPDU is requested, the first bit of the bitmap may indicate whether a 160 MHz DRU tone plan is applied to the higher (or lower) 160 MHz of the 320 MHz, and the second bit of the bitmap may indicate whether a 160 MHz DRU tone plan is applied to the lower (or higher) 160 MHz of the 320 MHz.

For example, if DRU is applied to two consecutive 80 MHz channels constituting a 160 MHz channel and there are no punctured channels, a 0 set in each bit of the bitmap may mean/indicate that an 80 MHz DRU tone plan is applied for each 80 MHz. Here, if there are punctured channels, a 20 or 40 MHz DRU tone plan may be applied to the remaining channels excluding the punctured channels among the 80 MHz channels. And, if there is no indication that DRU is applied to the 80 MHz channels, an RRU tone plan may be applied to the 80 MHz channels.

And, assume that DRU is applied to two 80 MHz channels constituting a 160 MHz channel and that there are no punctured channels in the entire 160 MHz channel. In this case, a 1 set to each bit of the bitmap may mean that a 160 MHz DRU tone plan is applied to a specific 160 MHz channel.

Additionally or alternatively, the trigger frame may indicate information about the DRU tone plan via a bitmap for specific channel units (e.g., 80, 160, 320 MHz). That is, the bitmap information related to the DRU tone plan of the trigger frame transmitted for each channel unit may be different.

For example, the size of a bitmap indicating a DRU tone plan in units of 80 or 160 MHz (e.g., 80 or 160 MHz DRU tone plan) may be 1 bit, and the size of a bitmap indicating a DRU tone plan in units of 320 MHz may be 2 bits.

For example, the first bit of a bitmap indicating a DRU tone plan in units of 320 MHz may indicate whether a 160 MHz DRU is applied to the higher (or lower) 160 MHz of 320 MHz, and the second bit of the bitmap may indicate whether a 160 MHz DRU is applied to the lower (or higher) 160 MHz of 320 MHz.

And, if a bitmap indicating a DRU tone plan in 80 MHz units is included in the trigger frame, the bitmap may be configured to be identical to the DRU tone plan indication bitmap included in the UHR variant user information field.

If it is indicated that a DRU is applied to a bandwidth of 160 MHz or more, and there are no punctured channels within the two 80 MHz channels constituting 160 MHz and the corresponding consecutive 80 MHz channels, a subfield indicating whether a 160 MHz DRU tone plan is applied may be valid. If a DRU is not applied to a bandwidth of 160 MHz or more, or if there are punctured channels within the two 80 MHz channels constituting 160 MHz and the corresponding consecutive 80 MHz channels, the subfield may be reserved or used for other purposes.

### Embodiment 5

In one embodiment of the present disclosure, the UHR variant common information field or the UHR variant special user information field of the trigger frame may include a subfield indicating the distribution bandwidth (DBW) of the channel where the DRU is used and/or the DRU to which it is applied. The subfield may be set/mapped to the location of the subfield described in Example 1 and/or Example 1-1.

Here, DBW may represent the size of the channel in which the DRUs are distributed, and the indication of DBW may be the same as the indication of whether the DRU tone plan for that channel size is applied.

A trigger frame that triggers a TB PPDU with a specific bandwidth (BW) or larger may have different information/values set in a subfield indicating the channel in which the DRU is used and/or the distributed bandwidth of the applied DRU (considering the RU type applied per channel in the TB PPDU). In this case, the bandwidth of the PPDU including the trigger frame may also be the same as the bandwidth of the TB PPDU.

Additionally, depending on the bandwidth of the TB PPDU, the number of bits in the subfield indicating the channel where the DRU is used and/or the distributed bandwidth of the DRU to which it is applied may be set to a different value. As another example, the number of bits in the subfield may be fixed to the bandwidth that requires the most bits.

The subfield included in the trigger frame that triggers a TB PPDU of 80 MHz or more (i.e., the subfield indicating the channel where the DRU is used and/or the distributed bandwidth of the DRU applied according to the bandwidth of the TB PPDU per 80 MHz channel) can be set to different values per 80 MHz channel. Below, the types of information that the subfield within the trigger frame can indicate according to the size of the bandwidth of the TB PPDU are described.
- 20 MHz BW: The above subfield may include i) information indicating that an RRU is used at 20 MHz and/or ii) information indicating that a DBW of the same size as the BW (i.e., 20 MHz DBW) is applied. If the above subfield is configured with a different number of bits for each BW, the above subfield may require 1 bit. If the above subfield is configured with the same number of bits for each BW, the remaining values, excluding two specific values of the above subfield (e.g., values associated with i and/or ii, respectively, which are set for each BW), may be reserved or used for other purposes.
- 40 MHz BW: The above subfield may include i) information indicating that an RRU is used at 40 MHz and/or ii) information indicating that a DBW of the same size as the BW (i.e., 40 MHz DBW) is applied. If the above subfield is configured with a different number of bits for each BW, the above subfield may require 1 bit. If the above subfield is configured with the same number of bits for each BW, the remaining values, excluding two specific values of the above subfield (e.g., values associated with i and/or ii, respectively, which are set for each BW), may be reserved or used for other purposes.

Additionally, the subfield may include information indicating iii) that a 20 MHz DBW is applied to each 20 MHz channel constituting 40 MHz. If the subfield is configured with a different number of bits per BW, the subfield may require 2 bits, and one of the values of the 2 bits may be reserved or used for other purposes. If the subfield is configured with the same number of bits per BW and the subfield exceeds 2 bits, the remaining values, excluding the values associated with each of the specific three values of the subfield (e.g., i set per BW), ii), and/or iii), may be reserved or used for other purposes.
- 80 MHz BW: The above subfield may include i) information indicating that an RRU is used at 80 MHz, ii) information indicating that a DBW of the same size as the BW (i.e., 80 MHz DBW) is applied, and/or iii) information indicating a DBW mode (e.g., 20+20+40 MHz / 40+20+20 MHz DBW mode). Here, the information indicating the DBW mode may indicate a 20+20+40 MHz DBW mode or a 40+20+20 MHz DBW mode. Based on the lower frequency channel, 20, 20, and 40 MHz DBWs may be applied in sequence, or 40, 20, and 20 MHz DBWs may be applied.

Here, if the subfield is configured with a different number of bits for each BW, the subfield may require 2 bits. If the subfield is configured with the same number of bits for each BW and the number of bits of the subfield is greater than 2, the remaining values, excluding the specific four values of the subfield (e.g., values associated with each of i, ii, and iii set for each BW), may be reserved or used for other purposes.

Additionally, the above subfield may include at least one of information indicating a P20+20+40 MHz DBW mode, information indicating a P40+40 MHz DBW mode, information indicating a P40+20+20 MHz DBW mode, information indicating a 1001 mode, information indicating a 40 MHz RRU+40 MHz DBW mode, and information indicating a 40 MHz RRU+20+20 MHz DBW mode.

For example, the P20+20+40 MHz DBW mode is a mode in which one 20 MHz channel is punctured, and there may be 4 modes depending on the location of the punctured 20 MHz channel. The P40+40 MHz DBW mode is a mode in which one 40 MHz channel is punctured, and there may be 2 modes depending on the location of the punctured 40 MHz channel. The P40+20+20 MHz DBW mode is a mode in which one 40 MHz channel is punctured, and there may be 2 modes depending on the location of the punctured 40 MHz channel.

The 40 MHz RRU+40 MHz DBW mode is a mode in which RRU is applied to one 40 MHz channel and 40 MHz DBW is applied to another 40 MHz channel, and there may be two modes depending on the 40 MHz type to which RRU or DRU is applied. The 40 MHz RRU+20+20 MHz DBW mode is a mode in which RRU is applied to one 40 MHz channel and 20 MHz DBW is applied to each of the two 20 MHz channels constituting the other 40 MHz channel, and there may be two modes depending on the channel type to which RRU or DRU is applied.

And, 1001 mode is a mode in which the two 20 MHz channels in the middle are punctured. There may be a mode in which 20 MHz DBW is applied to each of the two 20 MHz channels that are not punctured, and a mode in which 40 MHz DBW is applied by considering the two 20 MHz channels that are not punctured as one 40 MHz situation. Additionally, there may be two modes in which RRU is applied to one of the two 20 MHz channels that are not punctured and 20 MHz DBW is applied to the other 20 MHz channel.

Some of the modes described above may be included/applied, while others may not be included/applied. Additionally, if the subfield is configured with a different number of bits for each BW, the size of the subfield may be defined as 2, 3, 4, or 5 bits depending on the number of defined modes. Furthermore, values other than those indicating the modes described above within the subfield may be reserved or used for other purposes. As another example, if the subfield is configured with the same number of bits for each BW, the subfield may contain more bits than the number of bits required for the modes described above, and values other than those indicating the modes described above within the subfield may be reserved or used for other purposes.
- Each 80 MHz channel at a BW of 80 MHz or more: The mode used at the 80 MHz BW may be used as is. In this case, an 80 MHz DBW designation may be used instead of a DBW of the same size as the BW. As another example, "40 MHz RRU + 40 MHz DBW" and "40 MHz RRU + 20 + 20 MHz DBW" may not be defined. In this case, the above mode may be defined only at the 80 MHz BW.

Additionally, the 160 MHz DBW mode is a mode in which 160 MHz DBW is applied to a 160 MHz channel configured by a specific 80 MHz channel. The 160 MHz DBW mode may be indicated by the subfield above.

Some of the modes described above may be included/applied, while others may not be included/applied. Additionally, if the subfield is configured with a different number of bits for each BW, the size of the subfield may be defined as 2, 3, 4, or 5 bits depending on the number of modes defined. Furthermore, values other than those indicating the modes described above within the subfield may be reserved or used for other purposes. As another example, if the subfield is configured with the same number of bits for each BW, the subfield may contain more bits than the number of bits required for the modes described above, and values other than those indicating the modes described above within the subfield may be reserved or used for other purposes.

### Embodiment 5-1

Embodiment 5-1 relates to a method of indicating other modes through a specific mode indication. When various modes are supported, but other modes can be indicated by indicating a specific mode, the number of bits in the subfield for indicating the mode can be reduced, and thus the overhead can be reduced.

As an example of the present disclosure, the 20+20+40 MHz DBW mode, as well as the P20+20+40 MHz DBW mode and the 20+P20+40 MHz DBW mode, may be indicated through the 20+20+40 MHz DBW mode (i.e., through information indicating the 20+20+40 MHz DBW mode). If the lowest (or second lowest) 20 MHz channel is punctured, no DRU is assigned to the punctured channel, and accordingly, the modes described above may be indicated through the 20+20+40 MHz DBW mode. In this case, the DRU assignment for the channel may be indicated/applied through the RU assignment subfield of the UHR variant user information field.

Additionally, the P40+40 MHz DBW mode may be indicated through the 20+20+40 MHz DBW mode (i.e., through information indicating the 20+20+40 MHz DBW mode). When the first 40 MHz is punctured, no DRU is assigned to the punctured channel, and accordingly, the P40+40 MHz DBW mode may be indicated through the 20+20+40 MHz DBW mode.

Additionally, the 20+20+40 MHz DBW mode may be indicated through the 20+20+40 MHz DBW mode (i.e., through information indicating the 20+20+40 MHz DBW mode). When the second 40 MHz is punctured, no DRU is assigned to the punctured channel, and accordingly, the 20+20+P40 MHz DBW mode may be indicated through the 20+20+40 MHz DBW mode.

As another example of the present disclosure, 40+20+20 MHz DBW mode, as well as 40+P20+20 MHz DBW mode and 40+20+P20 MHz DBW mode, may be indicated through the 40+20+20 MHz DBW mode (i.e., through information indicating the 40+20+20 MHz DBW mode). If the second higher or highest 20 MHz channel is punctured, no DRU is assigned to the punctured channel, and accordingly, the modes described above may be indicated.

In addition, if the second 40 MHz channel is punctured, no DRU is assigned to the punctured channel, and accordingly, the P40+20+20 MHz DBW mode may be indicated through the 40+20+20 MHz DBW mode. And, if the first 40 MHz channel is punctured, no DRU is assigned to the punctured channel, and accordingly, the other mode described above may be indicated through the 40+20+20 MHz DBW mode.

The RRU indication method may be excluded from the mode indication method described above. In this case, a 1-bit subfield related to whether DRU or RRU is applied may be additionally defined as described in the embodiments described above. In this case, the subfield for DBW mode indication may be valid only when DRU is applied. When RRU is applied, the subfield for DBW mode indication may be reserved or used for other purposes.

### Embodiment 5-2

Embodiment 5-2 relates to a DRU application indication method and a DBW mode indication method based on Embodiment 5 and Embodiment 5-1. That is, in order to reduce the overhead of the subfield for indicating the DBW mode of Embodiment 5/5-1, a DRU application indication method may be applied, and the information described in Example 1 may be indicated through the UHR variant common information field or the UHR variant special user information field.

When a DRU application instruction is performed, the subfield for indicating the DBW mode described in Embodiment 5/5-1 may not be required in the channel where RRU is applied instead of DRU. That is, when RRU is applied, the field for indicating the DBW mode may be reserved or used for other purposes, which may be advantageous in terms of overhead.

In addition, a subfield to indicate the DBW mode of Embodiment 5/5-1 may be applied even in situations where DRU is applied instead of RRU, and a subfield indicating whether RRU is applied to the entire channel may not be necessary.

The method for directing the application of DRU is described below.

### Method 1

As Method 1, whether DRU is applied or only RRU is applied can be indicated by 1 bit of information (or subfield) by considering the entire bandwidth of the TB PPDU. Method 1 may be identical to the method of indicating that DRU is applied to the entire bandwidth among the DRU application indication methods described in Embodiment 1 or/and Embodiment 2.

In the case of Method 1, if a DRU is applied to at least a specific channel within the entire bandwidth of the TB PPDU, it may be indicated that a DRU is applied. Signaling overhead and complexity for indicating the application of a DRU may be reduced. However, if a subfield for indicating the DBW mode of Embodiment 5/5-1 is applied, information indicating whether to apply an RRU may always be required in situations where a TB PPDU of a specific bandwidth or larger is triggered.

### Method 2

In the case of Method 2, whether DRU is applied or only RRU is applied at a specific channel unit (e.g., 80 MHz unit) above a specific bandwidth (e.g., 80 MHz unit) may be indicated through 1-bit information (or subfield). Other methods may be the same as Method 1. Among the methods for indicating DRU application in Embodiment 1 and/or Embodiment 2, the method for indicating whether DRU is applied at a specific channel unit may be the same as Method 2.

Different information may be transmitted (via trigger frames) for each specific channel unit. For example, if DRU is applied to some channels within a specific channel, information indicating that DRU is applied may be included on the trigger frame transmitted to the specific channel. When Method 2 is applied, it may not be necessary to indicate whether RRU is applied to the entire specific channel unit when the subfield for indicating the DBW mode of Embodiment 5/5-1 is applied, and thus overhead may be reduced.

### Method 3

Beyond a certain bandwidth (e.g., 80 MHz), whether DRU or only RRU is applied may be indicated in a bitmap manner. That is, each bit included in the bitmap may indicate whether DRU or RRU is applied on the corresponding channel. And, the size of the channel corresponding to each bit may be 80 MHz or 160 MHz, but is not limited thereto.

When a specific bandwidth (e.g., 80 MHz) is exceeded, a bitmap indicating whether DRU is applied or only RRU is applied may be applied/configured differently at a specific channel unit (e.g., 160 MHz). That is, Method 3 may be the same as the method indicating whether DRU is applied in Embodiments 3 and 4, and Method 1 may be applied in the remaining bandwidth excluding the specific channel.

The number of bits in the subfield containing the bitmap may vary depending on the TB PPDU bandwidth. For example, when the channel size corresponding to each bit of the bitmap is 80 MHz, the bitmap subfield according to the bandwidths of 20, 40, and 80 MHz may be 1 bit, the bitmap subfield according to the bandwidth of 160 MHz may be 2 bits, and the bitmap subfield according to the bandwidth of 320 MHz may be 4 bits.

Additionally or alternatively, the number of bits in the subfield may be fixed by the maximum bandwidth defined in the UHR. For example, assume a case where the number of bits in the subfield is fixed. In this case, if the TB PPDU bandwidth is less than 320 MHz, the bit with the lowest (or highest) bit index of the bitmap included in the subfield may be used preferentially, and the bit with the higher (or lower) index may be reserved.

Additionally or alternatively, whether DRU is applied to a specific channel unit (e.g., 160 MHz) can be indicated via a trigger frame in a bitmap format for each channel. That is, the bitmap information of the trigger frame transmitted for each channel unit may differ.

For example, assume a case where a trigger frame requesting a 320 MHz TB PPDU (wherein the bandwidth of the PPDU transmitting the trigger frame is also 320 MHz) indicates whether a DRU is applied in 160 MHz increments. In this case, the trigger frame transmitted at each 160 MHz may indicate whether a DRU is applied in 80 MHz increments using a 2-bit bitmap-based subfield. The above subfield included in the trigger frame may be configured differently for each channel, but the remaining information included in the trigger frame may be the same regardless of the channel.

For example, each bit of a 2-bit bitmap can correspond to each 80 MHz that make up 160 MHz. And, the first bit of the bitmap can indicate whether DRU is applied to the lower 80 MHz of 160 MHz, and the second bit of the bitmap can indicate whether DRU is applied to the higher 80 MHz of 160 MHz.

When DRU is applied to some channels within a specific channel corresponding to a specific bit of the bitmap, the specific bit of the bitmap may indicate that DRU is applied. When Method 3 is used, when a subfield for indicating the DBW mode of Example 5/5-1 is applied, it may not be necessary to indicate whether RRU is applied to the entire channel corresponding to each bit of the bitmap. Accordingly, overhead may be reduced.

### Embodiment 5-3

As an embodiment of the present disclosure, it is assumed that Embodiments 5/5-1/5-2 is applied (e.g., when a specific channel unit is 80 MHz).

The subfield for indicating the DBW mode of Example 5/5-1 may be valid only within the channel where DRU, not RRU, is applied. Otherwise, the bits of the subfield may be reserved or used for other purposes.

As an example of the present disclosure, for a 20 MHz bandwidth, since there is only one possible DBW mode, a subfield to indicate the DBW mode of Embodiment 5/5-1 may not be required, even if there is an indication that DRU rather than RRU is applied. Accordingly, the bits of the subfield may be reserved or used for other purposes.

As another example of the present disclosure, for a 40 MHz bandwidth, even if there is an indication that a DRU rather than an RRU is applied when a 20+20 MHz DBW mode is not defined, a subfield for indicating the DBW mode of Embodiment 5/5-1 may not be required. Accordingly, the bits of the subfield may be reserved or used for other purposes.

When a 20+20 MHz DBW mode is considered and it is indicated that a DRU rather than an RRU is applied, a subfield for indicating the DBW mode of Embodiment 5/5-1 may be applied. And, except for Method 1 of Embodiment 5-2, information for indicating whether an RRU is applied to the entire channel in the subfield may not be necessary.

As another example of the present disclosure, for each 80 MHz channel in an 80 MHz bandwidth and a bandwidth greater than 80 MHz, a subfield for indicating the DBW mode of Example 5/5-1 may be applied, provided that it is indicated that a DRU rather than an RRU is applied. And, except for Method 1 of Embodiment 5-2, information for indicating whether an RRU is applied to the entire channel in the subfield may not be required.

In addition, a subfield for indicating the DBW mode can be configured by applying the redundant mode indication method described in Embodiment 5/5-1.

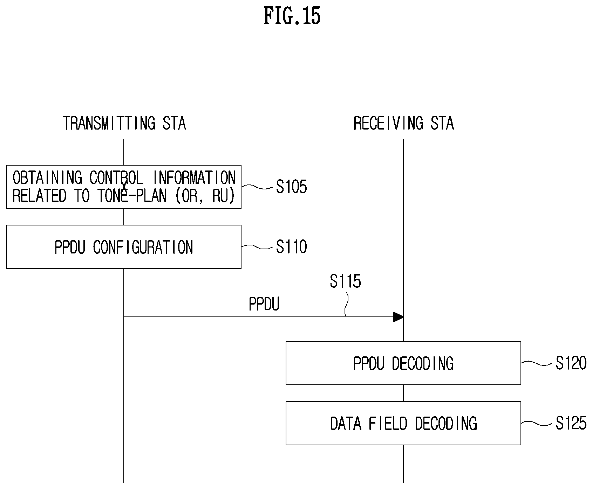

FIG. 15 is a diagram illustrating a PPDU transmission and reception procedure between a transmitting STA and a receiving STA according to one embodiment of the present disclosure. Some of the steps shown in FIG. 15 may be omitted depending on circumstances and/or settings. The transmitting device and the receiving STA may be APs and/or non-AP STAs.

The transmitting STA may acquire control information related to the above-described tone plan (or RU/DRU) (S105). The control information related to the tone plan may include information for the size and position of the RU, control information related to the RU, information for the frequency band in which the RU is included, and information for the STA receiving the RU.

The transmitting STA may construct/generate a PPDU based on the acquired control information (S110). Constructing/generating a PPDU may mean constructing/generating each field of the PPDU. That is, the step of constructing/generating the PPDU may include a step of constructing/configuring an EHT-SIG-A/B/C field including the control information for the tone plan.

That is, the step of constructing/generating the PPDU may include a step of constructing/configuring a field including control information (e.g., an N bitmap) indicating the size/position of the RU and/or a step of constructing/configuring a field including an identifier (e.g., AID) of the STA receiving the RU.

Additionally, the step of constructing/generating the PPDU may include a step of generating an STF/LTF sequence transmitted through a specific RU. The STF/LTF sequence may be generated based on a pre-configured STF generation sequence/LTF generation sequence.

Additionally, the step of constructing/generating the PPDU may include a step of generating a data field (i.e., MPDU) transmitted through a specific RU.

The transmitting STA may transmit the constructed/generated PPDU to the receiving STA (S115).

Specifically, the transmitting STA may perform at least one of cyclic shift diversity (CSD), spatial mapping, inverse discrete Fourier transform (IDFT)/inverse fast Fourier transform (IFFT) operations, and guard interval (GI) insertion operations.

The receiving STA may decode the PPDU and acquire control information related to the tone plan (or RU) (S120).

Specifically, the receiving STA may decode the L-SIG and EHT-SIG of the PPDU based on the L-STF/LTF, and acquire the information included in the L-SIG and EHT-SIG fields. Information for various tone plans (i.e., RUs) of the present disclosure may be included in the EHT-SIG (EHT-SIG-A/B/C, etc.), and the receiving STA may acquire information for the tone plan (i.e., RU) through the EHT-SIG.

The receiving STA may decode the remaining portion of the PPDU based on the acquired information for the tone plan (i.e., RU) (S125). For example, the receiving STA may decode the STF/LTF fields of the PPDU based on the information for the tone plan (i.e., RU). In addition, the receiving STA may decode the data field of the PPDU based on the information for the tone plan (i.e., RU) and acquire the MPDU included in the data field.

The receiving STA may also perform a processing operation of delivering the decoded data to a higher layer (e.g., MAC layer). In addition, when signal generation is instructed from the higher layer to the PHY layer in response to the data delivered to the higher layer, the receiving STA may perform subsequent operations.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method comprising:
receiving, by a first station (STA) from an access point (AP), a trigger frame including a common information field and a special user information field; and
transmitting, by the first STA to the AP, a trigger-based (TB) physical layer protocol data unit (PPDU) based on the trigger frame over a first bandwidth,
wherein the common information field or the special user information field transmitted in a second bandwidth among the first bandwidths includes a first subfield related to whether a distributed resource unit (DRU) is applied on the second bandwidth.

2. The method comprising:
wherein the common information field or the special user information field transmitted in a third bandwidth among the first bandwidths includes a second subfield related to whether a DRU is applied on the third bandwidth, and
wherein a size of each of the first subfield and the second subfield is same.

3. The method of claim 2, wherein:
the first subfield includes a first bitmap, and
whether a DRU is applied to a n-th unit bandwidth among the second bandwidths is indicated by n bits (n is a natural number greater than or equal to 1) of the first bitmap.

4. The method of claim 3, wherein:
a size of each of the a unit bandwidths is one of 20 MHz, 40 MHz, 80 MHz, or 160 MHz.

5. The method of claim 1, wherein:
the common information field or the special user information field transmitted in the second bandwidth among the first bandwidths includes a third subfield related to a distributed width (DBW) mode applied to the second bandwidth.

6. The method of claim 5, wherein:
based on indication by the first subfield that DRU is not applied to the second bandwidth, the third subfield is reserved.

7. The method of claim 5, wherein:
a value indicating a 20 + 20 + 40 MHz DBW mode set on the third subfield is used for a 20 + 20 + 40 MHz DBW mode, a puncturing(P)20 + 20 + 40 MHz DBW mode, a 20 + P20 + 40 MHz DBW mode, a P40 + 40 MHz DBW mode, or a 20 + 20 + P40 MHz DBW mode, and
a value indicating a 40 + 20 + 20 MHz DBW mode set on the third subfield is used for a 40 + 20 + 20 MHz DBW mode, a 40 + P20 + 20 MHz DBW mode, a 40 + 20 + P20 MHz DBW mode, a 40 + P40 MHz DBW mode, or a P40 + 20 + 20 MHz DBW mode, depending on a channel puncturing situation within the second bandwidth.

8. The method of claim 5, wherein:
the common information field or the special user information field transmitted in the third bandwidth among the first bandwidths includes a fourth subfield related to a DBW mode applied to the third bandwidth, and
a size of each of the third subfield and the fourth subfield is same.

9. The method of claim 8, wherein:
a value indicating a 20 + 20 + 40 MHz DBW mode set on the fourth subfield is used for a 20 + 20 + 40 MHz DBW mode, a P20 + 20 + 40 MHz DBW mode, a 20 + P20 + 40 MHz DBW mode, a P40 + 40 MHz DBW mode, or a 20 + 20 + P40 MHz DBW mode, and
a value indicating a 40 + 20 + 20 MHz DBW mode set on the fourth subfield is used for a 40 + 20 + 20 MHz DBW mode, a 40 + P20 + 20 MHz DBW mode, a 40 + 20 + P20 MHz DBW mode, a 40 + P40 MHz DBW mode, or a P40 + 20 + 20 MHz DBW mode.

10. The method of claim 1, wherein:
a bandwidth size of a PPDU including the trigger frame is same as a size of the first bandwidth.

11. A first station (STA) comprising:
at least one transceiver; and
at least one processor connected to the at least one transceiver,
wherein the at least one processor is configured to:
receive, from an access point (AP) through the at least one transceiver, a trigger frame including a common information field and a special user information field; and
transmit, to the AP through the at least one transceiver, a trigger-based (TB) physical layer protocol data unit (PPDU) based on the trigger frame over a first bandwidth,
wherein the common information field or the special user information field transmitted in a second bandwidth among the first bandwidths includes a first subfield related to whether a distributed resource unit (DRU) is applied on the second bandwidth.

12. A method comprising:
transmitting, by an access point (AP) to a first station (STA), a trigger frame including a common information field and a special user information field; and
receiving, by the AP from the first STA, a trigger-based (TB) physical layer protocol data unit (PPDU) based on the trigger frame over a first bandwidth,
wherein the common information field or the special user information field transmitted in a second bandwidth among the first bandwidths includes a first subfield related to whether a distributed resource unit (DRU) is applied on the second bandwidth.

13. An access point (AP) comprising:
at least one transceiver; and
at least one processor connected to the at least one transceiver,
wherein the at least one processor is configured to:
transmit, to a first station (STA) through the at least one transceiver, a trigger frame including a common information field and a special user information field; and
receive, from the first STA through the at least one transceiver, a trigger-based (TB) physical layer protocol data unit (PPDU) based on the trigger frame over a first bandwidth,
wherein the common information field or the special user information field transmitted in a second bandwidth among the first bandwidths includes a first subfield related to whether a distributed resource unit (DRU) is applied on the second bandwidth.

14. A processing device configured to control a first station (STA) in a wireless local area network (WLAN) system, the processing device comprising:
at least one processor; and
at least one computer memory operatively connected to the one or more processors and storing instructions that, when executed by the at least one processor, perform a method according to any one of claims 1 to 10.

15. At least one non-transitory computer-readable medium storing one or more commands,
wherein the one or more commands are executed by one or more processors to control a device in a wireless LAN system to perform a method according to any one of claims 1 to 10.
